# EUROPÄISCHE PATENTSCHRIFT

(11) **EP 1 976 716 B1**
(45) Veröffentlichungstag und Bekanntmachung des Hinweises auf die Patenterteilung: **23.12.2009**
(21) Anmeldenummer: 07702757.1
(22) Anmeldetag: 15.01.2007
(51) Int. Cl.: B60F 1/04, B61D 15/00

(54) **FAHRBARES ARBEITSGERÄT**
TRAVELLING MACHINE
ENGIN MOBILE

(30) Priorität: 26.01.2006 AT 1152006
(43) Veröffentlichungstag der Anmeldung: 08.10.2008
(73) Patentinhaber: Kettl, Markus, 4753 Taiskirchen (AT)
(72) Erfinder: Kettl, Markus, 4753 Taiskirchen (AT)
(74) Vertreter: Puchberger, Peter
(86) Internationale Anmeldenummer: PCT/EP2007/000285
(87) Internationale Veröffentlichungsnummer: WO 2007/085355

(56) Entgegenhaltungen:
- FR-A- 2 827 826
- FR-A- 2 854 102
- NL-C2- 1 022 533

## Beschreibung

Die Erfindung betrifft ein fahrbares Arbeitsgerät für das Bearbeiten von Fahrbahnen oder Flächen entlang Fahrbahnen, insbesondere von Geleisen und Geleiseoberbau, wobei das Gerät gegebenenfalls einen Satz Transporträder zum Fahren in Fahrbahnrichtung, insbesondere auf dem Geleise, weiters einen Fahrzeugrahmen, und auf diesem die Fahrzeuglast wie Führerkabine, Ladeplattform, Arbeitswerkzeuge und dergleichen aufweist. Die Fh-A-2854 102 offenbart ein gattungsgemäβes Arbeitsgerät. Das Bearbeiten von Fahrbahnen oder Flächen entlang der Fahrbahnen und insbesondere von Schienenwegen bereitet Probleme. Insbesondere für schwere Arbeitsgeräte wie Bagger und dergleichen ist der Einsatz problematisch. Die neben den Fahrbahnen befindlichen Böschungen und Kanäle etc sowie die längs verlaufenden Schienen bilden Hindernisse, die nicht leicht zu überwinden sind. Dies insbesondere dann, wenn diese Einrichtungen nicht beschädigt werden dürfen.

Bisher war es üblich, auf Waggons das Arbeitsgerät zum Einsatzort zu bringen und nach der Verrichtung der Arbeit wieder mit dem Waggon weg zu bringen. Dies bringt mit sich, dass das Arbeitsgerät lange Strecken geführt werden muss und nur kurze Bearbeitungszeiten zur Verfügung stehen. Dies gilt insbesondere für Schienenwege mit starkem Eisenbahnverkehr.

Bekannt sind bereits 2-Wege-Arbeitsgeräte, die auf Schienen transportiert werden können und seitlich klappbare Räder aufweisen. Zum Ein- und Ausgleisen dieser Fahrzeuge war es jedoch nötig, ein ebenes belastbares Gelände wie Eisenbahnkreuzungen oder Bahnhofsgelände aufzusuchen.

Ziel der.vorliegenden Erfindung ist ein fahrbares Arbeitsgerät, das entlang der Fahrbahn bis zum Einsatzort fahren oder auf anderen Wegen dorthin bewegt werden kann und welches dann während der Arbeit beliebig den Fahrbahnbereich seitlich verlassen kann, unter größtmöglicher Schonung der Fahrbahneinrichtungen und dies auch bei schwierigen Terrainverhältnissen.

Gemäß vorliegender Erfindung wird das fahrbare Arbeitsgerät derart ausgestaltet, dass am Fahrzeugrahmen zusätzlich zu den Transporträdern ein Satz Arbeitsräder vorgesehen ist, wobei zumindest eines der Arbeitsräder, bevorzugt alle Arbeitsräder, seitlich ausstellbar und in der Höhe verstellbar sind.

Weitere vorteilhafte Merkmale sind den Patentansprüchen, der nachfolgenden Beschreibung und den Zeichnungen zu entnehmen.

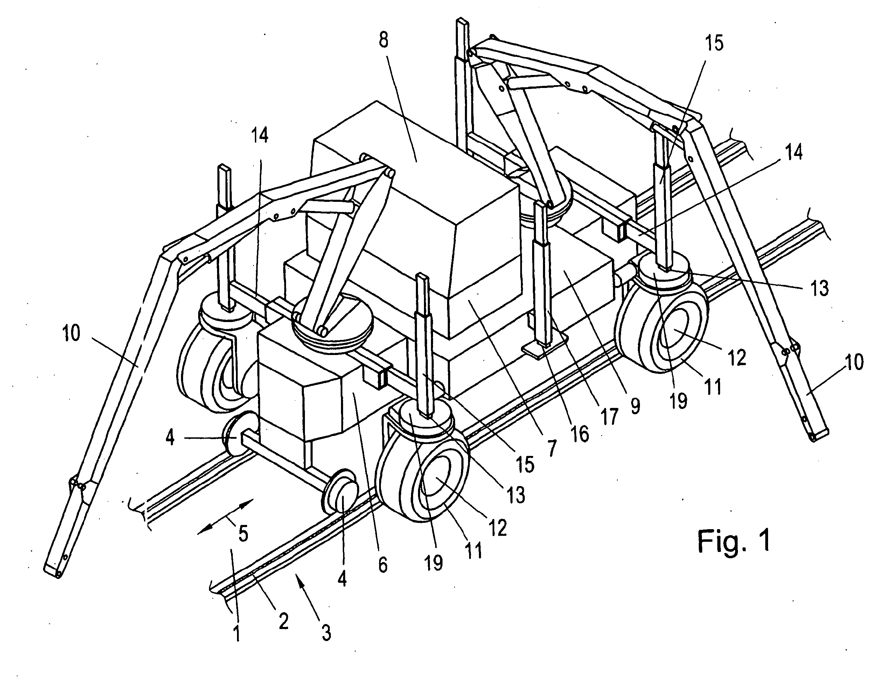

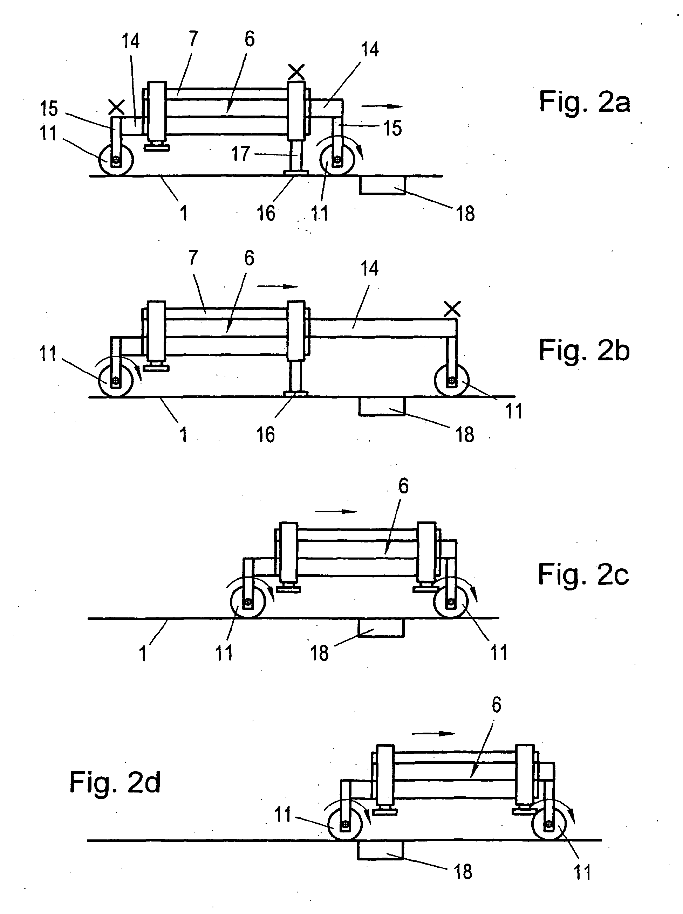

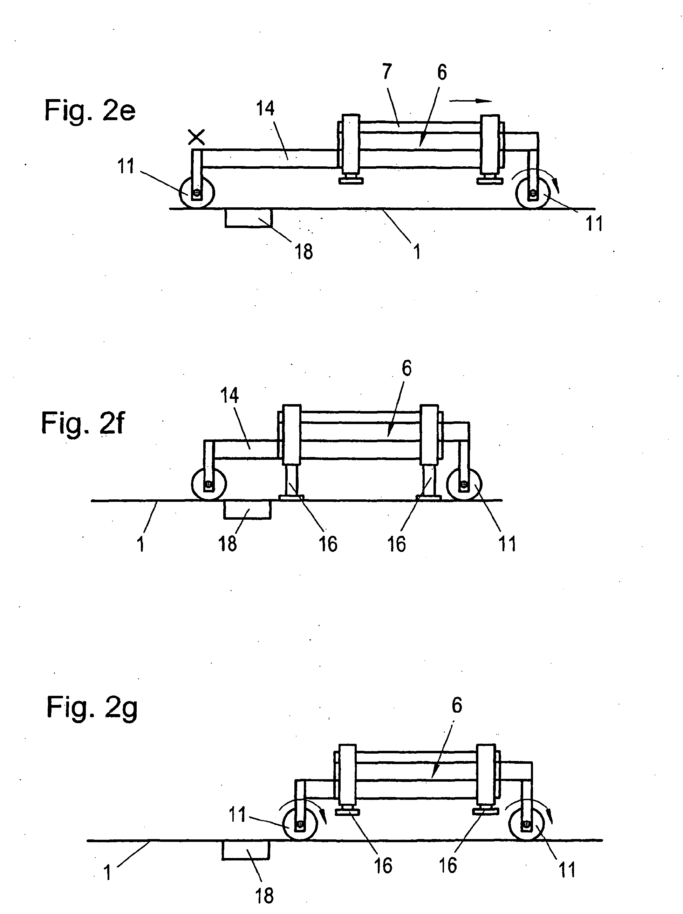

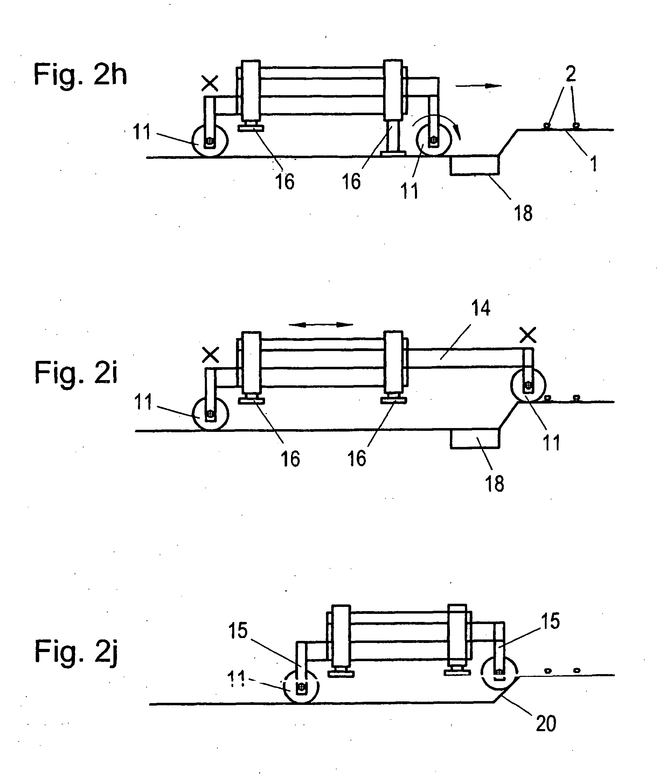

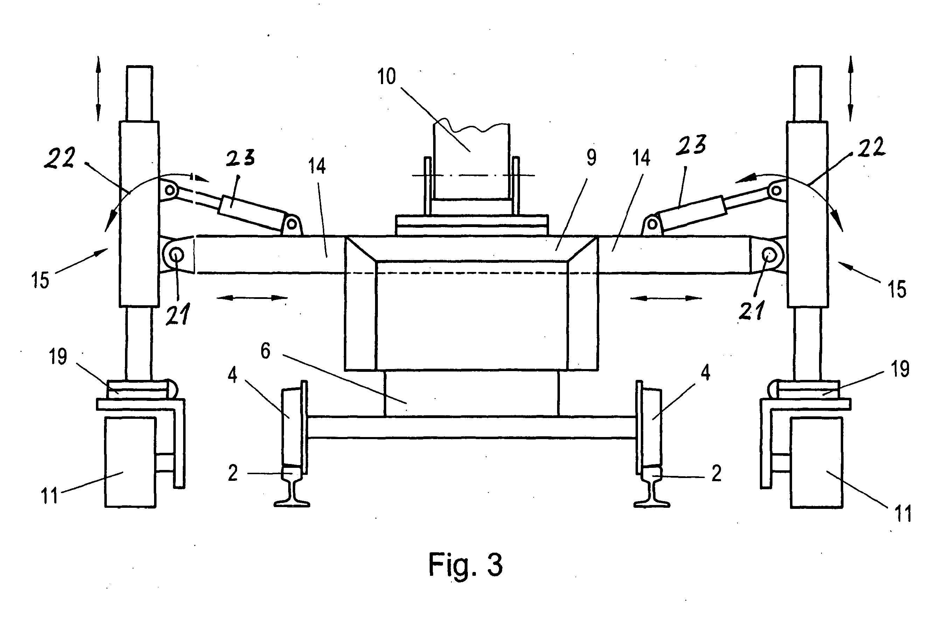

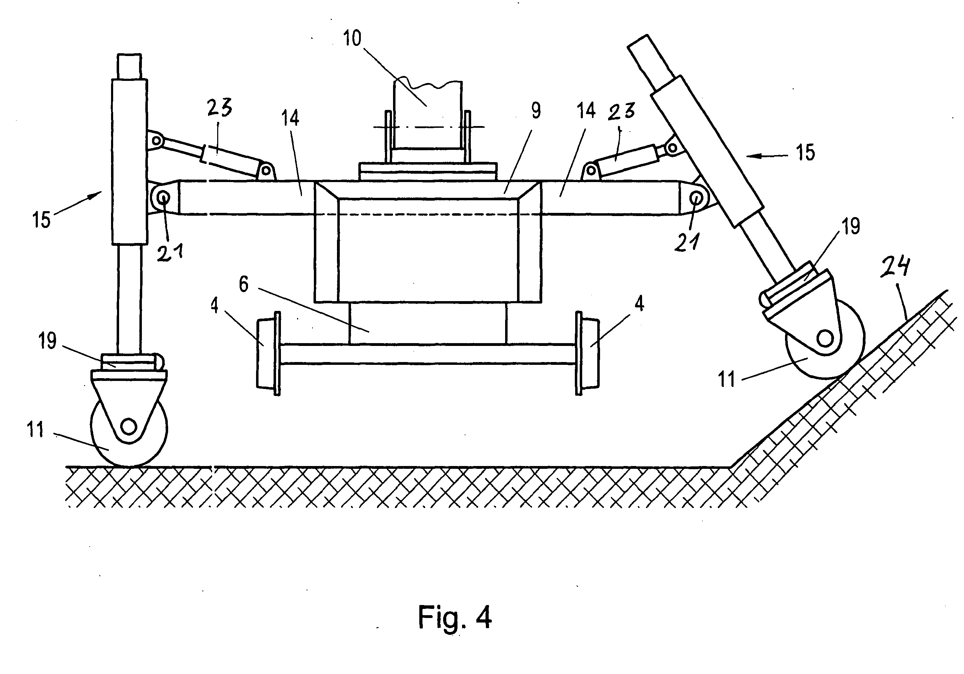

Fig. 1 zeigt die Schrägansicht eines erfindungsgemäßen Arbeitsgerätes. Fig. 2 zeigt in verschiedenen Funktionsstellungen eine schematisierte Ansicht des Arbeitsgerätes. Fig. 3 und 4 zeigen eine Frontansicht einer weiteren Ausführungsform in zwei verschiedenen Arbeitsstellungen .

Das Arbeitsgerät gemäß Fig. 1 kann als Schienenfahrzeug entlang eines Geleises in Fahrbahnrichtung an den Einsatzort gebracht zu werden. Am Arbeitsort ist das Gerät dafür ausgerichtet, Arbeiten am Geleise, am Geleisoberbau oder an den Flächen neben den Geleisen durchzuführen. Dabei kann das Gerät seitlich von den Schienen fortbewegt werden und Hindernisse wie Dammböschungen, Kabelkanäle und dgl. überwinden.

Die Fahrbahn 1 ist hier als Geleisoberbau 3 mit den Geleisen 2 ausgebildet. Für den Schienentransport weist das Gerät die Transporträder 4 auf, die hier in einfacher Weise an zwei querliegenden Achsen angeordnet sind, wobei nur eine der Achsen zu sehen ist. Diese Darstellung ist nur schematisch. Das Schienenradsystem kann auch mehrachsig ausgeführt sein, je nach Größe und Gewicht des Arbeitsgerätes und der maximal erforderlichen Fahrgeschwindigkeit.

Der Fahrzeugrahmen 6 weist an der Oberseite die Fahrzeuglast 7 mit Führerkabine 8 und Ladeplattform, 9 auf. Zusätzlich sind Arbeitswerkzeuge 10 vorgesehen, die hier als Auslegerarme für Ladeschaufeln oder sonstige Geräte ausgebildet sind. Weiters trägt der Fahrzeugrahmen verschiebbare Horizontalstreben 14 im vorderen und hinteren Bereich des Rahmens, wobei die Horizontalstreben seitlich aus dem Rahmen heraus verschiebbar sind. An den Enden der Horizontalstreben 14 sind Arbeitsräder 11 vorgesehen, die ihrerseits an Vertikalstreben 15 gelagert sind. Die Vertikalstreben 15 sind in vertikaler Richtung bewegbar. Die Arbeitsräder 11 sind sowohl um ihre l lorizontalachsen 12 als auch um je eine Vertikalachse 13 mittels Drehschemel 19 drehbar, sodass die Laufrichtung der Arbeitsräder bevorzugt bis zu 180° geschwenkt werden kann. Dadurch kann das Arbeitsgerät in eine Richtung bewegt werden, die verschieden von der Fahrbahnrichtung 5 ist.

Zufolge der geschilderten Anordnung ist es möglich, das Arbeitsgerät auf den Schienen fahren zu lassen., wobei die Arbeitsräder durch Anheben der Vertikalstreben von der Fahrbahn 1 abgehoben werden. Am Arbeitsplatz werden alle vier Arbeitsräder kraftbetrieben wieder nach unten gegen die Fahrbahn gedrückt, sodass die Transporträder 4 vom Geleise abgehoben werden und das Arbeitsgerät auf den Arbeitsrädern ruht und mit diesen fahrbar ist. Durch entsprechendes Anheben eines Teiles der Arbeitsräder können diese seitlich ausgestellt und das Arbeitsgerät seitlich verschoben werden. Das Arbeitsgerät kann somit seitlich aus dem Fahrbahnbereich heraussteigen, wobei auch Unebenheiten ausgeglichen werden können.

In Fig. 1 ist noch erkennbar, dass am Fahrzeugrahmen zu beiden Seiten Stützfüße 16 vorgesehen sind, die ebenfalls an Vertikalstreben befestigt sind, die wahlweise nach unten bewegt und gegen die Fahrbahn gestützt werden können. Dieses zusätzliche Stützen wird zumeist nur dann nötig sein, wenn beide Arbeitsräder einer Fahrzeugseite gleichzeitig angehoben und seitlich ausgestellt, also seitlich verschoben werden.

Die Fig. 2 zeigt schematisch verschiedene Bewegungsvorgänge des Arbeitsgerätes quer zur Fahrbahnrichtung 5. Die Angaben "links" und "rechts" sind auf den Betrachter bezogen. Mit X sind jeweils die feststehenden Elemente gekennzeichnet. In allen Fällen haben die Arbeitsräder 11 eine gegenüber Fig. 1 um 90° verschwenkte Position.

Die Fig. 2a zeigt den Vorgang des Heraussteigens aus der Fahrbahn 1 oder aus dem Geleise, wobei alle vier Arbeitsräder um 90° gedreht sind, sodass die Fahrrichtung quer zur Fahrbahnrichtung 5 verläuft. Die linken Räder bleiben stehen, der rechte. Stützfuß 16 ist abgesenkt und erlaubt somit ein lastfreies Ausstellen der rechten Arbeitsräder. Somit ist es möglich, den Kabeltrog 18 ohne Beschädigung zu überwinden.

Den nächsten Schritt zeigt Fig. 2b. Die rechten Arbeitsräder befinden sich bereits jenselts des kabeltroges und sind blockiert. Hydrauiisch oder elektromotorisch wird der Fahrzeugrahmen 6 entlang der Horizontalstreben 14 nach rechts bewegt, wobei der Stützfuß 16 hochgezogen ist. Die linken Arbeitsräder werden dabei mitgezogen, bis die Fahrstellung gemäß 2c erreicht ist, wodurch das Arbeitsgerät auf allen vier Arbeitsrädern seitlich nach rechts fahren kann, bis gemäß 2d jene Position erreicht ist, bei der die linken Arbeitsräder vor dem Kabeltrog stehen. Gemäß 2e werden nun die linken Arbeitsräder 11 blockiert und das Arbeitsgerät bewegt sich noch weiter nach rechts unter Ausstellen der linken Horizontalstreben 14. Weiters werden gemäß 2f die Stützen 16 abgesenkt (zumindest die linke Stütze wird benötigt) und sodann können die linken Arbeitsräder mittels deren Horizontalstreben 14 lastfrei über den Kabeltrog darüber gezogen werden. Gemäß 2g hat das Arbeitsgerät nunmehr den Kabeltrog überwunden und das Gerät kann weiter an seinen Arbeitsplatz fahren oder mit der Arbeit neben der Fahrbahn beginnen.

Wenn die vorherige Arbeitsweise im Bereich horizontaler Fahrbahnen dargestellt ist, so kann durch das Arbeitsgerät auch eine Böschung überwunden werden, wie dies zB anhand der Fig. 2h und i dargestellt ist. Diese Vorgangsweise ist notwendig, wenn zB das Arbeitsgerät zuerst über einen Kabeltrog, sodann eine Böschung hinauf und über das Geleise bewegt werden muß. Der Bewegungsablauf und die restlichen Schritte sind in Kenntnis der vorherigen Erläuterungen leicht nachvollziehbar.

Die Fig. 2i zeigt einen weiteren Vorteil des erfindungsgemäßen Arbeitsgerätes, wonach bei feststehenden Arbeitsrädern 11 ein Versetzen des Rahmens und der darauf befindlichen Fahrzeuglast nach links oder rechts möglich ist, was die Arbeitsbreite des Gerätes erheblich vergrößert.

Die Fig. 2j veranschaulicht das Überwinden einer Böschung 20 durch Höhenausgleich der Arbeitsräder 11 mittels Verstellen der Vertikalstreben 15.

Die Bewegung der Horizontalstreben 14 und Vertikalstreben 15 sowie der Stützfüße 16 mit deren Vertikalstreben 17 gegenüber dem Fahrzeugrahmen 6 erfolgt bevorzugt hydraulisch oder elektromotorisch. Der Antrieb der Antriebsräder 11 ist bevorzugt durch Radnabenmotore gegeben. Das Arbeitsgerät kann auch bezüglich der Transporträder selbstfahrend oder von Zug- oder Schubfahrzeugen bewegt werden.

Bevorzugt werden die Vertikalstreben 15 mit Hilfe eines automatischen Höhenausgleiches gesteuert. Dadurch kann auch beim Fahren eine annähernd horizontale Stellung des Fahrzeugrahmens eingehalten werden und der Fahrer ist diesbezüglich entlastet. Die ausstellbaren Arbeitsräder dienen auch der seitlichen Abstützung des Arbeitsgerätes, zB wenn die Arbeitswerkzeuge 10 seitlich ausgefahren werden. Damit wird ein Kippen des Gerätes verhindert.

In einer weiteren bevorzugten Ausführungsform können die Stützen 16 am unteren Ende mitlaufende und um eine Vertikalachse schwenkbare Stützräder aufweisen. Dadurch ist es möglich das Arbeitsgerät trotz abgesenkter und gegen den Boden gestemmter Stützen zu bewegen. Dies kann vorteilhaft sein, wenn zB die maximale Ausstellung der Horizontalstreben 14 nicht ausreicht, um ein Hindernis völlig zu überwinden.

Die Fig. 3 und 4 zeigen die schematische Frontansicht einer weiteren Ausführungsform des erfindungsgemäßen Arbeitsgerätes in verschiedenen Arbeitsstellungen. Die Funktionsstellung in Fig. 3 entspricht jener des Arbeitsgerätes wie in Fig. 1 dargestellt ist, dh dass die Arbeitsräder 11 in gleicher Laufrichtung stehen wie die Transporträder 4. Auch bei dieser Ausführungsform können die Horizontalstreben 14 zu beiden Seiten des Fahrzeuges seitlich zum Fahrzeug ausgefahren oder eingefahren werden. Die Arbeitsräder 11 sind um die Vertikalachse schwenkbar und die Höhe der Stellung der Arbeitsräder 11 zum Fahrzeug und zu den Transporträdern 4 ist derart verstellbar, dass in einer hochgezogenen Lage die Transporträder 4 auf den Schienen 2 aufsitzen und die Arbeitsräder 11 den Boden nicht berühren. Oder, es ist in der anderen Stellung, das Fahrzeug komplett vom Schienenstrang abgehoben und es ruht bzw fährt ausschliesslich auf den Arbeitsrädern 11. Die Hubhöhe ist dabei von der Länge der Vertikalstreben 15 und vom zugehörigen Antriebsmechanismus abhängig. In bevorzugterweise kann die Hubhöhe so groß sein, dass das Arbeitsgerät die Tätigkeit eines Portalkrans übernehmen kann, wobei auf dem Geleise Waggons untergeschoben werden können und das Arbeitsgerät auf dem Waggon Arbeiten verrichten kann.

Der Unterschied der Ausführungsform gemäß den Fig. 3, 4 gegenüber der zuvor anhand der Fig. 1 und 2 beschriebenen Konstruktion liegt darin, dass die Vertikalstreben 15 mittels Gelenken 21 an den Horizontalstreben 14 schwenkbar angeordnet sind. Die Schwenkbewegung ist durch die Pfeile 22 angedeutet. Die Vertikalstreben (15) werden in ihrer Winkelstellung gegenüber den Horizontalstreben, 14 mittels Hydraulikzylinder 23 oder gleichwertige Befestigungsmittel eingestellt.

Zufolge dieser Schwenkbarkeit der Vertikalstreben 15 wird beispielsweise das Überwinden von Böschungen erleichtert, wie in Fig. 4 dargestellt. Bei diesem Vorgang sind die Transporträder 4 vom Geleise abgehoben und das Fahrzeug bewegt sich nach rechts gegen eine Böschung 24. Wenn die Arbeitsräder 11 einzeln angetrieben sind, ist damit auch das Überwinden kleiner senkrechter oder sehr steil aufstehender Wände möglich, was bei immer vertikal angeordneten Vertikalstreben 15 nicht gegeben wäre.

Es ist selbstverständlich, dass die dargestellten Antriebsmittel für die Verschwenkung der Vertikalstreben 15 nur beispielsweise als Hydraulikzylinder 23 dargestellt sind. Es kann auch zweckdienlich sein, die Zylinder unterhalb der Horizontalstreben 14 anzuordnen.

## Patentansprüche

1. Fahrbares Arbeitsgerät für das Bearbeiten von Fahrbahnen oder Flächen entlang Fahrbahnen, insbesondere Geleisen und Geleiseoberbau, wobei das Gerät einen Satz Transporträder (4) zum Fahren in Fahrbahnrichtung, insbesondere auf dem Geleise, einen Fahrzeugrahmen, und auf diesem die Fahrzeuglast wie Führerkabine, Ladeplattform, Arbeitswerkzeuge und dergleichen und am Fahrzeugrahmen zusätzlich zu den Transporträdern (4) einen Satz Arbeitsräder (11) aufweist, wobei zumindest eines der Arbeitsräder (11), bevorzugt alle Arbeitsräder (11) in der Höhe verstellbar sind und dass die um annähernd horizontale Radachsen (12) drehbaren Arbeitsräder (11) zusätzlich jeweils um Vertikalachsen (13) schwenkbar sind, **dadurch gekennzeichnet dass** das eine Arbeitsrad (11) das in der Höhe verstellbar ist, oder alle Arbeitsräder (11) die bevorzugt in derHöhe verstellbar sind auch seitlich verstellbar sind.

2. Arbeitsgerät nach Anspruch 1, **dadurch gekennzeichnet, dass** die Arbeitsräder (11) an Horizontalstreben (14) angeordnet sind, die wahlweise gegenüber dem Fahrzeugrahmen (6) verstellbar sind.

3. Arbeitsgerät nach einem der Ansprüche 1 oder 2, **dadurch gekennzeichnet, dass** die Arbeitsräder (11) an Vertikalstreben (15) gelagert sind, die kraftbetrieben gegenüber den Horizontalstreben (14) verstellbar sind, wobei die Arbeitsräder (11) zwischen einer von der Fahrebene (1) abgehobenen Stellung und einer gegen die Fahrebene gestemmten Stellung unter Hochheben des Arbeitsgerätes und der Transporträder von der Fahrbahnebene, insbesondere Geleise, verstellbar sind.

4. Arbeitsgerät nach einem der vorhergehenden Ansprüche 1 bis 3, **dadurch gekennzeichnet, dass** der Fahrzeugrahmen (6) entlang der Horizontalstreben (14) seitlich verstellbar ist, wenn er von der Fahrbahn abgehoben und die Arbeitsräder (11) gegen den Boden gestemmt sind.

5. Arbeitsgerät nach einem der Ansprüche 1 bis 4, **dadurch gekennzeichnet, dass** am Fahrzeugrahmen (6) seitlich Stützfüße (16) vorgesehen sind, die gegen die Fahrbahn stützbar sind.

6. Arbeitsgerät nach einem der Ansprüche 1 bis 5, **dadurch gekennzeichnet, dass** die Arbeitsräder (11) einzeln angetrieben sind.

7. Arbeitsgerät nach Anspruch 6, **dadurch gekennzeichnet, dass** die Arbeitsräder (11) durch elektrische Radnabenmotore angetrieben sind.

8. Arbeitsgerät nach einem der Ansprüche 1 bis 7, **dadurch gekennzeichnet, dass** die Vertikalstreben (15) durch einen automatischen Höhenausgleich steuerbar sind.

9. Arbeitsgerät nach einem der Ansprüche 1 bis 8, **dadurch gekennzeichnet, dass** die Arbeitsräder (11) mittels Drehschemel (19) um zumindest 180° schwenkbar sind.

10. Arbeitsgerät nach einem der Ansprüche 1 bis 9, **dadurch gekennzeichnet, dass** die Stützfüße (16) am unteren Ende Stützräder aufweisen.

11. Arbeitsgerät nach Anspruch 10, **dadurch gekennzeichnet, dass** die an den Stützfüßen angeordneten Stützräder je ein mitlaufendes um eine Vertikalachse schwenkbares Stützrad sind.

12. Arbeitsgerät nach einem der Ansprüche 1 bis 11, **dadurch gekennzeichnet, dass** die Vertikalstreben (15) mittels Gelenken (21) an den Horizontalstreben (14) schwenkbar angeordnet sind.

13. Arbeitsgerät nach Anspruch 12, **dadurch gekennzeichnet, dass** die Winkelstellung der Vertikalstrebe (15) gegenüber der Horizontalstrebe (14) mittels Hydraulik (22) oder gleichwertiger Betätigungsmittel einstellbar ist.

## Claims

1. Travelling machine for working on roadways or surfaces along roadways, in particular railway tracks and a railway track superstructure, wherein the device has a set of transport wheels (4) for travelling in the roadway direction, in particular on the railway track, a vehicle frame, and, thereon, the vehicle load, such as the driver's cab, loading platform, working tools and the like and, on the vehicle frame, a set of working wheels (11) in addition to the transport wheels (4), wherein at least one of the working wheels (11), preferably all the working wheels (11), are height-adjustable and in that the working wheels (11) which can be rotated about approximately horizontal wheel axles (12), can additionally be pivoted in each case about vertical axes (13), **characterised in that** one working wheel (11), which is height-adjustable, or all the working wheels (11), which are preferably height-adjustable, are also laterally adjustable.

2. Machine according to claim 1, **characterised in that** the working wheels (11) are arranged on horizontal struts (14), which can optionally be adjusted relative to the vehicle frame (6).

3. Machine according to either of claims 1 or 2, **characterised in that** the working wheels (11) are mounted on vertical struts (15), which can be adjusted in a power-driven manner relative to the horizontal struts (14), the working wheels (11) being adjustable between a position which is raised from the travelling plane (1) and a position pressed against the travelling plane with the machine and the transport wheels being lifted up from the roadway plane, in particular railway track.

4. Machine according to any one of the preceding claims 1 to 3, **characterised in that** the vehicle frame (6) can be laterally adjusted along the horizontal struts (14) when it is lifted from the roadway and the working wheels (11) are pressed against the ground.

5. Machine according to any one of claims 1 to 4, **characterised in that** support feet (16), which can be supported against the roadway, are provided laterally on the vehicle frame (6).

6. Machine according to any one of claims 1 to 5, **characterised in that** the working wheels (11) are driven individually.

7. Machine according to claim 6, **characterised in that** the working wheels (11) are driven by electric wheel hub motors.

8. Machine according to any one of claims 1 to 7, **characterised in that** the vertical struts (15) can be controlled by an automatic height compensation.

9. Machine according to any one of claims 1 to 8, **characterised in that** the working wheels (11) can be pivoted by means of centre pivot plates (19) through at least 180°.

10. Machine according to any one of claims 1 to 9, **characterised in that** the support feet (16) have support wheels at the lower end.

11. Machine according to claim 10, **characterised in that** the support wheels arranged on the support feet each have a co-running support wheel which can be pivoted about a vertical axis.

12. Machine according to any one of claims 1 to 11, **characterised in that** the vertical struts (15) are pivotably arranged by means of joints (21) on the horizontal struts (14).

13. Machine according to claim 12, **characterised in that** the angular position of the vertical strut (15) can be adjusted relative to the horizontal strut (14) by means of hydraulics (22) or equivalent actuating means.

## Revendications

1. Engin mobile pour le traitement de voies de roulement ou de faces le long de voies de roulement, en particulier de voies ferrées et de superstructures de voies, où l'engin comporte un jeu de roues de transport (4) pour le roulement dans la direction de la voie, en particulier sur la voie ferrée, un châssis de véhicule, et sur celui-ci la charge de véhicule comme la cabine du conducteur, la plate-forme de chargement, des outils de travail et analogue, et au châssis de véhicule additionnellement aux roues de transport (4) un jeu de roues de travail (11), où au moins une des roues de travail (11), de préférence toutes les roues de travail (11), sont ajustables en hauteur, et en ce que les roues de travail (11) aptes à tourner autour d'essieux de roue (12) approximativement horizontaux peuvent être amenées à pivoter additionnellement à chaque fois autour d'axes verticaux (13), **caractérisé en ce que** la roue de travail précitée (11) qui est ajustable en hauteur, ou bien toutes les roues de travail (11) qui sont de préférence ajustables en hauteur, sont également ajustables latéralement.

2. Engin selon la revendication 1, **caractérisé en ce que** les roues de travail (11) sont disposées à des montants horizontaux (14) qui sont ajustables sélectivement par rapport au châssis de véhicule (6).

3. Engin selon l'une des revendications 1 ou 2,
**caractérisé en ce que** les roues de travail (11) sont logées à des montants verticaux (15) qui, commandés par moteur, sont déplaçables par rapport aux montants horizontaux (14), où les roues de travail (11) sont déplaçables entre une position relevée du plan de roulement (1) et une position en appui sur le plan de roulement, en relevant l'engin et les roues de transport du plan de roulement, en particulier de la voie.

4. Engin selon l'une des revendications précédentes 1 à 3, **caractérisé en ce que** le châssis de véhicule (6) est déplaçable latéralement le long des montants horizontaux (14), lorsqu'il est relevé de la voie et que les roues de travail (11) s'appuient sur le sol.

5. Engin selon l'une des revendications 1 à 4,
**caractérisé en ce que** sont prévus au châssis de véhicule (6) sur le côté des pieds d'appui (16) qui peuvent s'appuyer sur la voie.

6. Engin selon l'une des revendications 1 à 5,
**caractérisé en ce que** les roues de travail (11) sont entraînées individuellement.

7. Engin selon la revendication 6, **caractérisé en ce que** les roues de travail (11) sont entraînées par des moteurs électriques de moyeu de roue.

8. Engin selon l'une des revendications 1 à 7,
**caractérisé en ce que** les montants verticaux (15) peuvent être commandés par une compensation automatique en hauteur.

9. Engin selon l'une des revendications 1 à 8,
**caractérisé en ce que** les roues de travail (11) peuvent être amenées à pivoter au moyen de traverses pivotantes (19) selon au moins 180°.

10. Engin selon l'une des revendications 1 à 9,
**caractérisé en ce que** les pieds d'appui (16) présentent à l'extrémité inférieure des roues d'appui.

11. Engin selon la revendication 10, **caractérisé en ce que** les roues d'appui disposées aux pieds d'appui sont à chaque fois une roue d'appui entraînée conjointement, apte à pivoter autour d'un axe vertical.

12. Engin selon l'une des revendications 1 à 11,
**caractérisé en ce que** les montants verticaux (15) sont disposés d'une manière pivotante par des articulations (21) aux montants horizontaux (14).

13. Engin selon la revendication 12, **caractérisé en ce que** la position angulaire du montant vertical (15) par rapport au montant horizontal (14) est réglable par une hydraulique (22) ou un moyen d'actionnement équivalent.
